# EUROPÄISCHE PATENTANMELDUNG

(11) **EP 3 196 684 A1**
(43) Veröffentlichungstag der Anmeldung: **26.07.2017**
(21) Anmeldenummer: 16206266.5
(22) Anmeldetag: 22.12.2016
(51) Int. Cl.: G02B 6/38, H01R 13/44, H01R 13/02

(54) **VERBINDER**

(30) Priorität: 25.01.2016 DE 102016101254
(71) Anmelder: NEUTRIK AG, 9494 Schaan (LI)
(72) Erfinder: Koch, Matthias, 6840 Götzis (AT)
(74) Vertreter: Fechner, Thomas

(57) **Zusammenfassung**

Verbinder (1), insbesondere Kabelverbinder, zur Herstellung einer optischen und elektrischen Verbindung mit einem Gegenverbinder (2), wobei der Verbinder (1) ein Verbinderhauptgehäuse (3) und zumindest ein Gehäusevorsatzteil (4) und zumindest einen Lichtleiterträger (5) aufweist und das Gehäusevorsatzteil (4) mittels einer lösbaren und wiederverbindbaren Verbindungseinrichtung (6) lösbar am Verbinderhauptgehäuse (3) befestigt oder befestigbar ist, wobei am Verbinderhauptgehäuse (3) der Lichtleiterträger (5) und zumindest ein elektrischer Kontakt (7) angeordnet sind und das Gehäusevorsatzteil (4) zumindest einen elektrischen Verlängerungskontakt (8) aufweist, welcher durch Verbinden des Gehäusevorsatzteils (4) mit dem Verbinderhauptgehäuse (3) mit dem elektrischen Kontakt (7) des Verbinderhauptgehäuses (3) verbindbar ist.

## Beschreibung

Die vorliegende Erfindung betrifft einen Verbinder, insbesondere Kabelverbinder, zur Herstellung einer optischen und elektrischen Verbindung mit einem Gegenverbinder, wobei der Verbinder ein Verbinderhauptgehäuse und zumindest ein Gehäusevorsatzteil und zumindest einen Lichtleiterträger aufweist und das Gehäusevorsatzteil mittels einer lösbaren und wiederverbindbaren Verbindungseinrichtung lösbar am Verbinderhauptgehäuse befestigt oder befestigbar ist.

Verbinder der oben genannten Art werden dazu verwendet, Kabel, welche zumindest einen Lichtleiter zur Datenübertragung aufweisen, mit einem anderen Kabel oder mit einem Gerät, wie z.B. einer Fernseh- oder Filmkamera oder dergleichen, zu verbinden. Damit die Datenübertragung über solche optischen Verbindungen über Verbinder und Gegenverbinder hinweg funktioniert, müssen die offenen Enden der Lichtleiter im Verbinder sehr sauber gehalten und gegebenenfalls gereinigt werden können. Bei gattungsgemäßen Verbindern ist es bekannt, das Gehäusevorsatzteil mittels der lösbaren und wiederverbindbaren Verbindungseinrichtung vom Verbinderhauptgehäuse zu lösen, um das Gehäusevorsatzteil separat reinigen zu können.

Aufgabe der Erfindung ist es, Verbinder der oben genannten Art dahingehend zu verbessern, dass nicht die Gefahr besteht, dass bei abgenommenem Gehäusevorsatzteil elektrische Kontakte des Verbinders aus Versehen berührt werden können.

Erfindungsgemäß ist hierzu bei Verbindern der oben genannten Art vorgesehen, dass am Verbinderhauptgehäuse der Lichtleiterträger und zumindest ein elektrischer Kontakt angeordnet sind und das Gehäusevorsatzteil zumindest einen elektrischen

Verlängerungskontakt aufweist, welcher durch Verbinden des Gehäusevorsatzteils mit dem Verbinderhauptgehäuse mit dem elektrischen Kontakt des Verbinderhauptgehäuses verbindbar ist.

Durch das Anordnen von zumindest einem Verlängerungskontakt im Gehäusevorsatzteil kann der beim Abnehmen des Gehäusevorsatzteils gegebenenfalls noch unter Betriebsspannung stehende elektrische Kontakt des Verbinderhauptgehäuses verborgen bzw. weiter hinten angeordnet werden, sodass auch im abgenommenen Zustand des Gehäusevorsatzteils nicht die Gefahr besteht, dass noch unter Spannung stehende elektrische Kontakte des Verbinderhauptgehäuses freistehen bzw. berührt werden. Freistehende elektrische Kontakte stellen für denjenigen, der die Reinigung vornimmt, die Gefahr dar, einen elektrischen Schlag oder eine sonstige Verletzung davonzutragen.

Besonders bevorzugte Ausgestaltungsformen der Erfindung sehen vor, dass der elektrische Kontakt des Verbinderhauptgehäuses mit dem elektrischen Verlängerungskontakt des Gehäusevorsatzteils mittels einer Steckverbindung verbindbar ist. In anderen Worten können der elektrische Kontakt und der elektrische Verlängerungskontakt bevorzugt direkt oder indirekt ineinander gesteckt werden. Dies hat den Vorteil einer einfachen und schnellen Verbindung, da Steckverbindungen sehr einfach zusammengefügt und auch wieder getrennt werden können.

Besonders bevorzugt ist bei erfindungsgemäßen Verbindern aber vor allem vorgesehen, dass eine Kontaktfläche des Lichtleiterträgers, in der zumindest ein offenes Ende von zumindest einem Lichtleiter des Verbinders mündet, in einer Verbindungsrichtung, in der der elektrische Kontakt des Verbinderhauptgehäuses mit dem elektrischen Verlängerungskontakt des Gehäusevorsatzteils verbindbar ist, gesehen, versetzt zum elektrischen Kontakt des Verbinderhauptgehäuses angeordnet ist. Durch den Versatz zwischen dem oder den offenen Enden bzw. der Kontaktfläche des Lichtleiterträgers einerseits und den elektrischen Kontakten des Verbinderhauptgehäuses andererseits, können die Kontaktfläche des Lichtleiterträgers und damit die offenen Enden der Lichtleiter gereinigt werden, ohne dass man Gefahr läuft, die dazu versetzt angeordneten elektrischen Kontakte zu berühren. Besonders bevorzugt ist in diesem Zusammenhang vorgesehen, dass die Kontaktfläche des Lichtleiterträgers vom restlichen Verbinderhauptgehäuse weiter absteht als der elektrische Kontakt des Verbinderhauptgehäuses.

Soweit in den Patentansprüchen und auch den obigen Ausführungen Bauteile in Einzahl genannt sind, ist dies eine rein sprachliche Vereinfachung und schließt nicht aus, dass einzelne Bauteile des erfindungsgemäßen Verbinders auch in einer Anzahl größer eins im Sinne von zumindest ein bzw. mehrere vorhanden sind. Dies gilt insbesondere für die Anzahl der Lichtleiter, welche am Lichtleiterträger befestigt sind und mit ihren offenen Enden in der Kontaktfläche des Lichtleiterträgers münden. Meist werden bei erfindungsgemäßen Verbindern mehrere Lichtleiter am Lichtleiterträger befestigt sein und mit ihren offenen Enden in der genannten Kontaktfläche des Lichtleiterträgers münden.

Darüber hinaus können erfindungsgemäße Verbinder aber natürlich auch mit mehr als einem Gehäusevorsatzteil und mit mehr als einem Lichtleiterträger etc. ausgerüstet sein.

Das offene Ende eines Lichtleiters ist das Ende, durch das Licht aus dem Lichtleiter austreten und Licht in den Lichtleiter eintreten kann. Das offene Ende bzw. die offenen Enden der Lichtleiter in der Kontaktfläche können mit oder ohne Linsen oder anderen Mitteln zur optischen Bündelung oder Streuung von Licht ausgerüstet sein. Beim Lichtleiter handelt es sich um eine optisch leitende Faser, welche in der Regel abgesehen vom oder von den offenen Enden von einem Mantel umgeben ist. Lichtleiter und Mantel zusammen ergeben beim Stand der Technik an sich bekannte Lichtleiterkabel. Die Lichtleiter können z. B. aus Glasfasern o. dgl. bestehen. Beim oben verwendeten Begriff einer optischen Verbindung handelt es sich um eine Verbindung, die zur optischen Datenübertragung vorgesehen ist. Bei einer elektrischen Verbindung handelt es sich um eine solche, über die elektrische Daten bzw. Informationen ausgetauscht werden können und/oder eine Strom- bzw. Spannungsversorgung erfolgt.

Bei einem Verbinder wie auch bei einem Gegenverbinder handelt es sich allgemein gesprochen um Mittel zur Herstellung einer Verbindung zwischen zumindest zwei Kabeln oder zumindest einem Kabel und einem Gerät. Die Kabel weisen im vorliegenden Fall einen oder mehrere Lichtleiter und eine oder mehrere elektrische Leitungen auf. Der Begriff des Gegenverbinders wurde eingeführt, um Verbinder und Gegenverbinder sprachlich unterscheiden zu können. Beim Gegenverbinder handelt es sich um einen korrespondierenden anderen Verbinder, wobei der Verbinder und der Gegenverbinder bzw. andere Verbinder in einer Zusammenführrichtung so miteinander zusammenführbar bzw. miteinander verbindbar sind, dass die optische Verbindung und auch die elektrische Verbindung hergestellt werden. Sowohl beim erfindungsgemäßen Verbinder als auch beim Gegenverbinder kann es sich um eine sogenannte Chassisbuchse, welche auch als Gerätebuchse bezeichnet werden könnte, handeln. Chassisbuchsen sind an sich bekannt. Sie sind diejenigen Verbinder, welche an Geräten bzw. deren Gehäusen angebracht werden. Sowohl der erfindungsgemäße Verbinder als auch der Gegenverbinder können aber auch als sogenannte Kabelverbinder ausgebildet sein. Kabelverbinder sind die Verbinder, welche am oben genannten Kabel befestigt sind. Um zwei Kabel miteinander zu verbinden, werden an den beiden miteinander zu verbindenden Kabeln jeweils Kabelverbinder angebracht. Um ein Kabel mit einem Gerät bzw. dessen Gehäuse zu verbinden, werden in der Regel am Gerät eine Chassisbuchse und am Kabel ein Kabelverbinder angebracht.

Generell könnten die Verbinder auch als Stecker bezeichnet werden. Beim Zusammenführen von Verbinder und Gegenverbinder könnte man dann auch von einem Zusammenstecken sprechen. Die erfindungsgemäßen Verbinder und auch die damit korrespondierenden Gegenverbinder können aber nicht nur durch ein Ineinanderstecken sondern auch durch ein miteinander Verschrauben oder andere Verbindungsarten oder Kombinationen daraus miteinander verbunden werden.

Die lösbare und wieder verbindbare Verbindungseinrichtung, mit der das Gehäusevorsatztell lösbar mit dem Verbinderhauptgehäuse verbunden werden kann, ist eine Verbindungseinrichtung, die dazu vorgesehen und ausgelegt ist, dass die mittels ihr hergestellte Verbindung mehrfach gelöst und wieder hergestellt werden kann. Es handelt sich hierbei also insbesondere um eine zerstörungsfreie Art des Lösens und wieder Verbindens. Besonders bevorzugt handelt es sich bei der lösbaren und wieder verbindbaren Verbindungseinrichtung, mit der das Gehäusevorsatzteil lösbar am Verbinderhauptgehäuse befestigt wird, um eine an sich bekannte Schraubverbindung.

Alternativ können bei der Erfindung aber auch andere an sich bekannte lösbare und wieder verbindbare Verbindungseinrichtungen zur Befestigung des Gehäusevorsatzteils am Verbinderhauptgehäuse realisiert werden. Als Beispiel hierfür sind Bajonettverschlüsse oder gesicherte Steckverbindungen zu nennen. Gesicherte Steckverbindungen sind solche, bei denen die Steckverbindung erst dann wieder gelöst werden kann, wenn eine entsprechende Sicherung gelöst wird. Bei Bajonettverschlüssen handelt es sich um eine Verbindung, bei der die zu verbindenden Teile ineinander gesteckt und anschließend in entgegengesetzte Richtung zueinander verdreht werden, um miteinander verbunden zu werden. Das Lösen erfolgt durch Drehen und Auseinanderziehen in den entsprechend entgegengesetzten Richtungen.

Alle genannten Arten einer Verbindungseinrichtung sind, für sich alleine gesehen, bekannt.

Besonders bevorzugt ist vorgesehen, dass der elektrische Kontakt des Verbinderhauptgehäuses und/oder der elektrische Verlängerungskontakt des Gehäusevorsatzteils stiftartig ausgebildet sind.

Um den erfindungsgemäßen Verbinder besonders betriebssicher zu machen, sehen bevorzugte Ausgestaltungsformen der Erfindung vor, dass der elektrische Kontakt des Verbinderhauptgehäuses vollständig in einer, vorzugsweise ausschließlich, stirnseitig offenen und am Verbinderhauptgehäuse angeordneten Ummantelung versenkt angeordnet ist.

Der elektrische Kontakt des Verbinderhauptgehäuses und der elektrische Verlängerungskontakt des Gehäusevorsatzteils sind in bevorzugten Ausgestaltungsformen zur elektrischen Leistungsübertragung mit Betriebsspannungen von 40 Volt bis 600 Volt konfiguriert. Hierbei ist sowohl Gleichstrom als auch Wechselstrom möglich.

Das Gehäusevorsatzteil weist in bevorzugten Ausgestaltungsformen einen an seinen beiden Stirnseiten offenen Durchgangskanal auf, in dem der Lichtleiterträger im miteinander verbundenen Zustand von Verbinderhauptgehäuse und Gehäusevorsatzteil angeordnet ist.

Besonders bevorzugte Ausgestaltungsformen sehen vor, dass der erfindungsgemäße Verbinder ein Kabelverbinder ist und, im miteinander verbundenen Zustand von Verbinderhauptgehäuse und Gehäusevorsatzteil gesehen, ein Kabel auf der zum Gehäusevorsatzteil gegenüberliegenden Seite des Verbinderhauptgehäuses in das Verbinderhauptgehäuse mündet.

Das Gehäusevorsatzteil ist bevorzugt ein vorstehender bzw. männlicher Fortsatz des Verbinders, welcher beim Verbinden mit dem Gegenverbinder in diesen bzw. in eine weibliche Buchse des Gegenverbinders eindringt.

Weitere Merkmale und Einzelheiten bevorzugter Varianten eines erfindungsgemäßen Verbinders werden nachfolgend in der Figurenbeschreibung anhand eines erfindungsgemäßen Ausführungsbeispiels des Verbinders erläutert. Es zeigen:
Fig. 1 und 2 perspektivische Ansichten auf das Ausführungsbeispiel des erfindungsgemäßen Verbinders;
Fig. 3 eine perspektivische Ansicht bei der das Gehäusevorsatzteil vom Verbinderhauptgehäuse abgenommen ist;
Fig. 4 eine Explosionsdarstellung der Bauteile des in den Figuren gezeigten erfindungsgemäßen Ausführungsbeispiels eines Verbinders;
Fig. 5 und 6 Längsschnitte durch den erfindungsgemäßen Verbinder und
Fig. 7 ein Längsschnitt durch den erfindungsgemäßen Verbinder, wenn er mit einem Gegenverbinder verbunden ist.

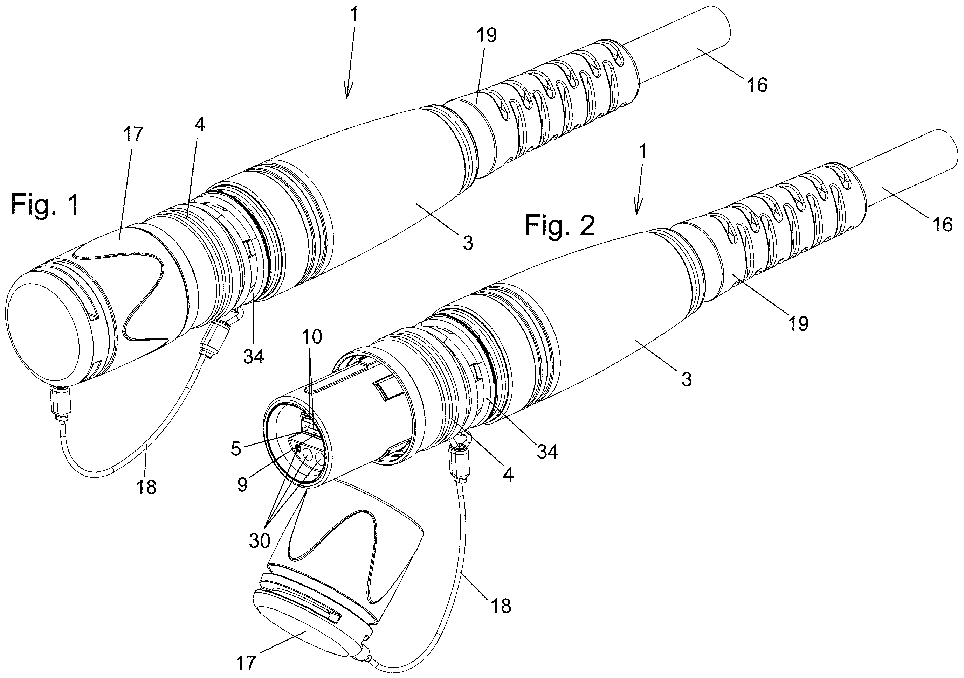

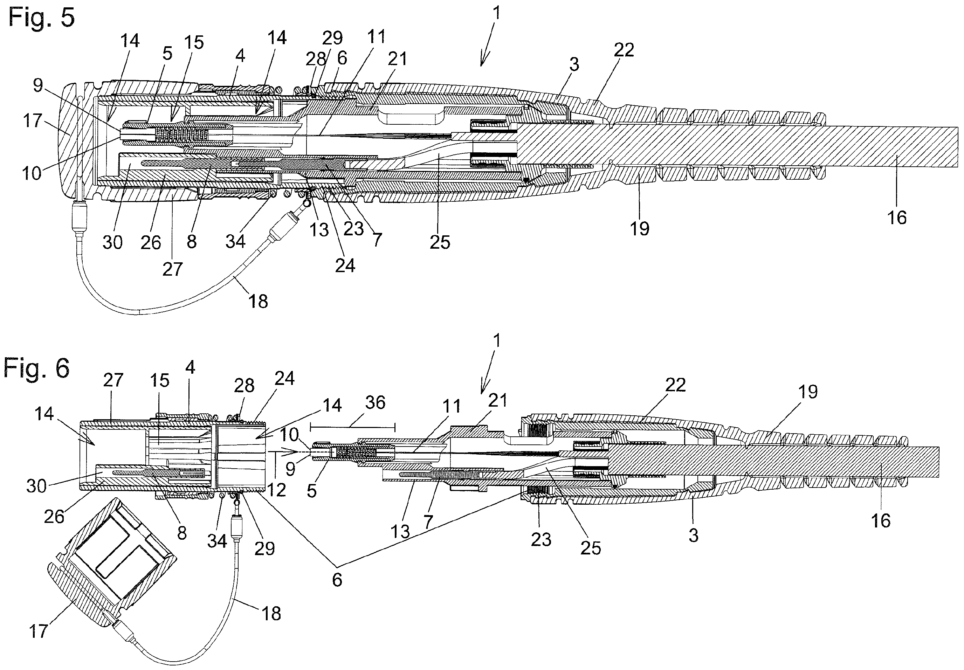

In den Fig. 1 und 2 ist der erfindungsgemäße Verbinder in einer Betriebsstellung dargestellt, in der das Gehäusevorsatzteil 4 mittels der Verbindungseinrichtung 6 am Verbinderhauptgehäuse 3 befestigt ist. Auf der zum Gehäusevorsatzteil 4 gegenüberliegenden Seite des Verbinderhauptgehäuses 3 mündet das Kabel 16 durch die Kabeltülle 19 hindurch in das Verbinderhauptgehäuse 3. Das Gehäusevorsatzteil 4 bildet einen männlichen Fortsatz aus, welcher in diesem Ausführungsbeispiel durch eine Schutzkappe 17 geschützt werden kann. Die Schutzkappe 17 ist mittels eines hier seilartigen Verlierschutzes 18 am Gehäusevorsatzteil 4 unverlierbar befestigt. In Fig. 1 ist die Schutzkappe 7 auf den männlichen Fortsatz des Gehäusevorsatzteils 4 aufgesetzt. In Fig. 2 ist die Schutzkappe 17 abgezogen dargestellt. In Fig. 2 sieht man dadurch in das vordere offene Ende des Gehäusevorsatzteils 4 hinein. Man sieht dort die Kontaktfläche 9 des Lichtleiterträgers 5 mit den hier in einer Reihe angeordneten offenen Enden 10 der Lichtleiter 11. Darunter sind die Kanäle 30 angeordnet, in denen sich die elektrischen Verfängerungskontakte 8 befinden. Dies ist im Detail vor allem in den Fig. 5 und 6, wie sie weiter hinten beschrieben werden, gut zu sehen.

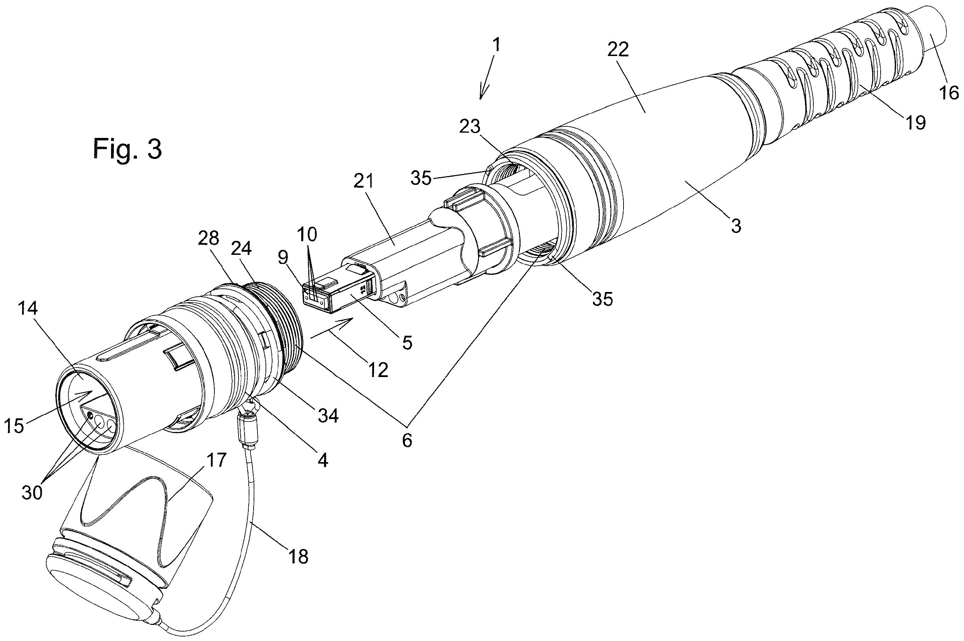

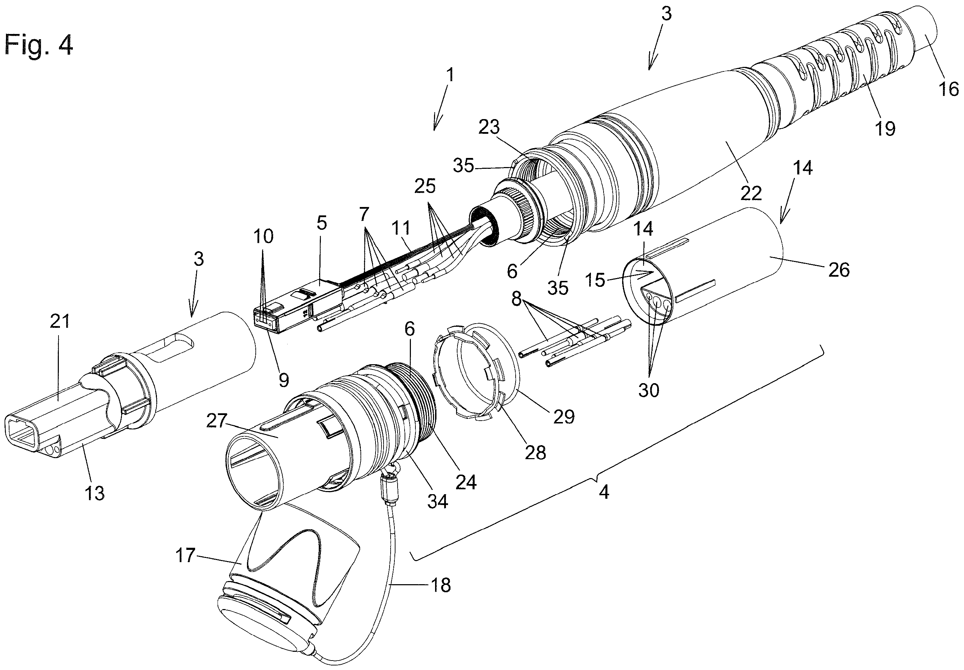

In Fig. 3 ist nun nach Lösen der Verbindungseinrichtung 6 das Gehäusevorsatzteil 4 losgelöst vom Verbinderhauptgehäuse 3 dargestellt. Man sieht hier gut das Innengewinde 23 am Verbinderhauptgehäuse 3 und das Außengewinde 24 am Gehäusevorsatzteil 4. Diese beiden Gewinde 23 und 24 bilden zusammen eine Schraubverbindung, welche in diesem Ausführungsbeispiel die lösbare und wieder verbindbare Verbindungseinrichtung 6 ausbildet. Wie eingangs bereits erläutert, könnten hier alternativ aber auch andere Verbindungsformen wie z.B. ein Bajonettverschluss oder eine gesicherte Steckverbindung verwendet werden, um das Gehäusevorsatzteil 4 mit dem Verbinderhauptgehäuse 3 lösbar und wieder verbindbar zu verbinden. Im gezeigten Ausführungsbeispiel ist diese Schraubverbindung der Verbindungseinrichtung 6 gesichert. Hierzu sind in diesem Ausführungsbeispiel am hinteren Teil 22 des Verbinderhauptgehäuses 3 die Sicherungszapfen 35 angeordnet. In diese greift im zusammengeschraubten Zustand der besonders gut in Fig. 4 sichtbare Sicherungsring 28 ein. Will man die Schraubverbindung lösen, so muss man den Sicherungsring 28 so nach vorne, also vom hinteren Teil 22 des Verbinderhauptgehäuses 3 weg ziehen, dass die Sicherungszapfen 35 außer Eingriff mit dem Sicherungsring 28 geraten. Erst dann kann in diesem Ausführungsbeispiel das hintere Teil 22 des Verbinderhauptgehäuses 3 durch Drehung um seine Längsachse vom Gehäusevorsatzteil 4 abgeschraubt werden. Das Ziehen des Sicherungsrings 28 weg vom hinteren Teil 22 des Verbinderhauptgehäuses 3 erfolgt unter Kompression der Vorspannfeder 34, welche den Sicherungsring 28 in Richtung hin zu den Sicherungszapfen 35 vorspannt.

In der in Fig. 3 dargestellten Stellung ist das Gehäusevorsatzteil 4 entgegen der Verbindungsrichtung 12 vom Verbinderhauptgehäuse 3 abgezogen. Hierdurch wurde auch der am vorderen Teil 21 des Verbinderhauptgehäuses 3 angeordnete Lichtleiterträger 5 mit den offenen Enden 10 der Lichtleiter 11 aus dem Durchgangskanal 15 des Gehäusevorsatzteils 4 herausgezogen. Der Durchgangskanal 15 weist an seinen beiden gegenüberliegenden Stirnseiten 14 jeweils offene Enden auf, sodass der Lichtleiterträger 5 beim Zusammenfügen von Gehäusevorsatzteil 4 und Verbinderhauptgehäuse 3 in Verbindungsrichtung 12 in den Durchgangskanal 15 eindringen kann.

In der Explosionsdarstellung gemäß Fig. 4 sind die einzelnen Bauteile des hier dargestellten erfindungsgemäßen Verbinders 1 gut zu sehen. Aus dem durch die Kabeltülle 19 und das hintere Teil 22 des Verbinderhauptgehäuses 3 hindurchgeführten Kabel 16 münden die elektrischen Leitungen 25 und die Lichtleiterkabel mit den Lichtleitern 11. Die Lichtleiter 11 sind im Lichtleiterträger 5 befestigt, ihre offenen Enden 10 münden in der Kontaktfläche 9 des Lichtleiterträgers 5. Die elektrischen Leitungen 25 münden in den elektrischen Kontakten 7 des Verbinderhauptgehäuses 3. Im gezeigten Ausführungsbeispiel sind insgesamt vier elektrische Kontakte 7 und entsprechend auch vier elektrische Leitungen 25 vorhanden. Zwei davon können z.B. zur elektrischen Datenübertragung und andere zwei davon zur elektrischen Leistungsübertragung dienen. Das vordere Teil 21 des Verbinderhauptgehäuses besteht bevorzugt aus elektrisch isolierendem Material wie z.B. Kunststoff. Es trägt in diesem Ausführungsbeispiel auch die Ummantelungen 13 der elektrischen Kontakte 7, wie in den nachfolgenden Figuren bzw. deren Schnittdarstellungen noch besser zu sehen ist.

Gut zu sehen ist in Fig. 4 auch, dass in diesem Ausführungsbeispiel auch das Gehäusevorsatzteil 4 mehrteilig ausgeführt ist. Es weist zunächst den Einsatz 26 auf, welcher z.B. aus Kunststoff oder einem anderen elektrisch isolierenden Material gefertigt sein kann. In diesem Einsatz 26 befindet sich in diesem Ausführungsbeispiel auch der Durchgangskanal 15 des Gehäusevorsatzteils 4 mit seinen jeweils offenen Enden an den Stirnseiten 14. Im Einsatz 26 befinden sich darüber hinaus auch die Kanäle 30, in denen die elektrischen Verlängerungskontakte 8 angeordnet sind. Der Dichtring 29 kann, wie beim Stand der Technik an sich bekannt, ausgeführt sein. Der Mantel 27 des Gehäusevorsatzteils 4, welcher im zusammengebauten Zustand den Einsatz 26 ummantelt, kann z.B. aus Metall ausgeführt sein. Die Funktion des Sicherungsrings 28 und der ihn vorspannenden Vorspannfeder 34 wurde weiter oben bereits erläutert.

Die Fig. 5 und 6 zeigen Längsschnitte durch den erfindungsgemäßen Verbinder 1 dieses Ausführungsbeispiels. In Fig. 5 ist das Gehäusvorsatzteil 4 mittels der Verbindungseinrichtung 6 mit dem Verbinderhauptgehäuse 3 verbunden. In Fig. 6 ist die Verbindungseinrichtung 6 gelöst und das Gehäusevorsatzteil 4 ist entgegen der Verbindungsrichtung 12 vom Verbinderhauptgehäuse 3 abgezogen.

Die elektrischen Kontakte 7 des Verbinderhauptgehäuses 3 sind in diesem Ausführungsbeispiel über eine Steckverbindung in der Stellung gemäß Fig. 5 mit den elektrischen Verlängerungskontakten 8 im Gehäusevorsatzteil 4 verbunden. In den Fig. 5 und 6 ist besonders gut zu sehen, wie erfindungsgemäß am Verbinderhauptgehäuse 3 der Lichtleiterträger 5 und die elektrischen Kontakte 7 angeordnet sind und das Gehäusevorsatzteil 4 die elektrischen Verlängerungskontakte 8 aufweist, welche durch Verbinden des Gehäusevorsatzteils 4 mit dem Verbinderhauptgehäuse 3 mit den elektrischen Kontakten des Verbinderhauptgehäuses 3 verbindbar sind. In Fig. 6 ist auch gut zu sehen, dass die elektrische Kontaktfläche 9 des Lichtleiterträgers 5, in der die offenen Enden 10 der Lichtleiter 11 des Verbinders 1 münden, in der Verbindungsrichtung 12 gesehen gegenüber den elektrischen Kontakten 7 versetzt angeordnet sind. Der Versatz ist in Fig. 6 mit dem Bezugszeichen 36 gekennzeichnet. Es ist in Fig. 6 auch gut zu sehen, wie die Kontaktfläche 9 des Lichtleiterträgers 5 vom restlichen Verbindergehäuse 3 weiter absteht als der elektrische Kontakt 7 des Verbinderhauptgehäuses 3. Weiter ist auch gut zu sehen, dass die elektrischen Kontakte 7 des Verbinderhauptgehäuses 3 vollständig in der ausschließlich stirnseitig offenen und am Verbinderhauptgehäuse 3 angeordneten Ummantelung 13 versenkt angeordnet sind. In der in Fig. 6 dargestellten getrennten Stellung von Verbinderhauptgehäuse 3 und Gehäusevorsatzteil 4 können die Kontaktfläche 9 und damit die offenen Enden 10 der Lichtleiter 11 gereinigt werden, ohne dass die diese Reinigung vornehmende Person Gefahr läuft, an den elektrischen Kontakten 7 einen elektrischen Schlag zu erleiden oder sich in anderer Art und Weise zu verletzen.

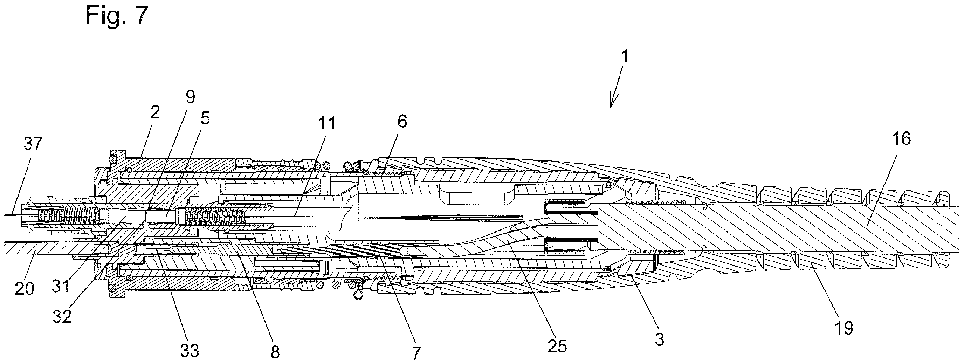

Fig. 7 zeigt ebenfalls einen Längsschnitt, wobei hier allerdings der erfindungsgemäße Verbinder 1 des bisher geschilderten Ausführungsbeispiels mit einem korrespondierenden Gegenverbinder 2 verbunden ist. Beim Gegenverbinder 2 handelt es sich hier um eine Chassisbuchse, in die der männliche Fortsatz des Gehäusevorsatzteils 4 zur Herstellung der Verbindung eingeschoben wird. In der dargestellten Verbindungsstellung stehen die elektrischen Kontakte 7 des Verbinderhauptgehäuses 3 über die elektrischen Verlängerungskontakte 8 mit entsprechenden elektrischen Kontakten 33 des Gegenverbinders 2 in elektrisch leitender Verbindung. Der Lichtleiterträger 5 des Verbinderhauptgehäuses 3 liegt mit seiner Kontaktfläche 9 unmittelbar an einer Kontaktfläche 32 eines Lichtleiterträgers 31 des Gegenverbinders 2 an. Hierdurch kommen die in der Kontaktfläche 9 angeordneten offenen Enden 10 der Lichtleiter 11 des Verbinders 1 in lichtleitende Verbindung mit entsprechenden offenen Enden von Lichtleitern 37 des Gegenverbinders 2, sodass optische Signale über diese Verbindung hin und her transportiert werden können. Über die elektrischen Kontakte 7, die elektrischen Verlängerungskontakte 8 und die elektrischen Kontakte 33 sind die elektrischen Leitungen 25 des Verbinders 1 mit den elektrischen Leitungen 20 des Gegenverbinders 2 elektrisch leitend verbunden.

Der Vollständigkeit halber wird noch darauf hingewiesen, dass in Fig. 7 die Schutzkappe 17 und der Verlierschutz 18 nicht dargestellt sind.

**Legende zu den Hinweisziffern:**

| | | | |
|---|---|---|---|
| 1 | Verbinder | 28 | Sicherungsring |
| 2 | Gegenverbinder | 29 | Dichtring |
| 3 | Verbinderhauptgehäuse | 30 | Kanal |
| 4 | Gehäusevorsatz | 31 | Lichtleiterträger |
| 5 | Lichtleiterträger | 32 | Kontaktfläche |
| 6 | Verbindungseinrichtung | 33 | elektrischer Kontakt |
| 7 | elektrischer Kontakt | 34 | Vorspannfeder |
| 8 | elektrischer Verlängerungskontakt | 35 | Sicherungszapfen |
| | | 36 | Versatz |
| 9 | Kontaktfläche | 37 | Lichtleiter |
| 10 | offenes Ende | | |
| 11 | Lichtleiter | | |
| 12 | Verbindungsrichtung | | |
| 13 | Ummantelung | | |
| 14 | Stirnseite | | |
| 15 | Durchgangskanal | | |
| 16 | Kabel | | |
| 17 | Schutzkappe | | |
| 18 | Verlierschutz | | |
| 19 | Kabeltülle | | |
| 20 | elektrische Leitung | | |
| 21 | vorderes Teil | | |
| 22 | hinteres Teil | | |
| 23 | Innengewinde | | |
| 24 | Außengewinde | | |
| 25 | elektrische Leitung | | |
| 26 | Einsatz | | |
| 27 | Mantel | | |

## Patentansprüche

1. Verbinder (1), insbesondere Kabelverbinder, zur Herstellung einer optischen und elektrischen Verbindung mit einem Gegenverbinder (2), wobei der Verbinder (1) ein Verbinderhauptgehäuse (3) und zumindest ein Gehäusevorsatzteil (4) und zumindest einen Lichtleiterträger (5) aufweist und das Gehäusevorsatzteil (4) mittels einer lösbaren und wiederverbindbaren Verbindungseinrichtung (6) lösbar am Verbinderhauptgehäuse (3) befestigt oder befestigbar ist, **dadurch gekennzeichnet, dass** am Verbinderhauptgehäuse (3) der Lichtleiterträger (5) und zumindest ein elektrischer Kontakt (7) angeordnet sind und das Gehäusevorsatzteil (4) zumindest einen elektrischen Verlängerungskontakt (8) aufweist, welcher durch Verbinden des Gehäusevorsatzteils (4) mit dem Verbinderhauptgehäuse (3) mit dem elektrischen Kontakt (7) des Verbinderhauptgehäuses (3) verbindbar ist.

2. Verbinder (1) nach Anspruch 1, **dadurch gekennzeichnet, dass** der elektrische Kontakt (7) des Verbinderhauptgehäuses (3) mit dem elektrischen Verlängerungskontakt (8) des Gehäusevorsatzteils (4) mittels einer Steckverbindung verbindbar ist.

3. Verbinder (1) nach Anspruch 1 oder 2, **dadurch gekennzeichnet, dass** eine Kontaktfläche (9) des Lichtleiterträgers (5), in der zumindest ein offenes Ende (10) von zumindest einem Lichtleiter (11) des Verbinders (1) mündet, in einer Verbindungsrichtung (12), in der der elektrische Kontakt (7) des Verbinderhauptgehäuses (3) mit dem elektrischen Verlängerungskontakt (8) des Gehäusevorsatzteils (4) verbindbar ist, gesehen, versetzt zum elektrischen Kontakt (7) des Verbinderhauptgehäuses (3) angeordnet ist.

4. Verbinder (1) nach Anspruch 3, **dadurch gekennzeichnet, dass** die Kontaktfläche (9) des Lichtleiterträgers (5) vom restlichen Verbinderhauptgehäuse (3) weiter absteht als der elektrische Kontakt (7) des Verbinderhauptgehäuses (3).

5. Verbinder (1) nach einem der Ansprüche 1 bis 4, **dadurch gekennzeichnet, dass** der elektrische Kontakt (7) des Verbinderhauptgehäuses (3) und/oder der elektrische Verlängerungskontakt (8) des Gehäusevorsatzteils (4) stiftartig ausgebildet sind.

6. Verbinder (1) nach einem der Ansprüche 1 bis 5, **dadurch gekennzeichnet, dass** der elektrische Kontakt (7) des Verbinderhauptgehäuses (3) vollständig in einer, vorzugsweise ausschließlich, stirnseitig offenen und am Verbinderhauptgehäuse (3) angeordneten Ummantelung (13) versenkt angeordnet ist.

7. Verbinder (1) nach einem der Ansprüche 1 bis 6, **dadurch gekennzeichnet, dass** das Gehäusevorsatzteil (4) einen, an seinen beiden Stirnseiten (14) offenen Durchgangskanal (15) aufweist, in dem der Lichtleiterträger (5) im miteinander verbundenen Zustand von Verbinderhauptgehäuse (3) und Gehäusevorsatzteil (4) angeordnet ist.

8. Verbinder (1) nach einem der Ansprüche 1 bis 7, **dadurch gekennzeichnet, dass** der elektrische Kontakt (7) des Verbinderhauptgehäuses (3) und der elektrische Verlängerungskontakt (8) des Gehäusevorsatzteils (4) zur elektrischen Leistungsübertragung mit Betriebsspannungen von 40 Volt bis 600 Volt konfiguriert sind.

9. Verbinder (1) nach einem der Ansprüche 1 bis 8, **dadurch gekennzeichnet, dass** die lösbare und wiederverbindbare Verbindungseinrichtung (6) zur Befestigung des Gehäusevorsatzteils (4) mit dem Verbinderhauptgehäuse (3) eine Schraubverbindung und/oder eine gesicherte Steckverbindung und/oder ein Bajonettverschluss ist.

10. Verbinder (1) nach einem der Ansprüche 1 bis 9, **dadurch gekennzeichnet, dass** der Verbinder (1) ein Kabelverbinder ist und, im miteinander verbundenen Zustand von Verbinderhauptgehäuse (3) und Gehäusevorsatzteil (4) gesehen, ein Kabel (16) auf der zum Gehäusevorsatzteil (4) gegenüberliegenden Seite des Verbinderhauptgehäuses (3) in das Verbinderhauptgehäuse (3) mündet.
